# DEMANDE DE BREVET EUROPEEN

(11) **EP 4 147 618 A1**
(43) Date de publication de la demande: **15.03.2023**
(21) Numéro de dépôt: 22190985.6
(22) Date de dépôt: 18.08.2022
(51) Int. Cl.: A47J 37/07

(54) **DISPOSITIF DE CUISSON MULTIFONCTION POUR USAGE EN EXTERIEUR**

(30) Priorité: 14.09.2021 BE 202105719
(71) Demandeur: NEW BODART & GONAY, 4650 Herve (BE)
(72) Inventeur: COUASNARD, Jean-Philippe, 4650 Herve (BE); DROEVEN, Nicolas, 4650 Herve (BE)
(74) Mandataire: Gevers Patents

(57) **Abrégé**

L'invention concerne un dispositif de cuisson multifonction (1) pour usage en extérieur, et des méthodes d'utilisation de ce dispositif. Le dispositif comprend notamment une enceinte comprenant une sole (3), un foyer vertical (8) et un foyer horizontal (4), ainsi qu'une paroi supérieure (9) comprenant une plancha (10). Le dispositif de cuisson permet de cuire les aliments selon différents modes de cuisson qui peuvent être combinés simultanément : gril, plancha, four, et four à pizza. Les aliments à cuire peuvent être disposés sur la sole (3), la grille de gril (12), ou la plancha (10). Le dispositif permet de cuire les aliments à partir de combustibles solides tels que du bois ou du charbon de bois.

## Description

### Domaine technique

L'invention se rapporte à un dispositif de cuisson multifonction pour usage en extérieur comprenant une enceinte. Le dispositif comprend un foyer horizontal et un foyer vertical aptes à accueillir des combustibles solides. La sole du foyer ainsi que la paroi supérieure peuvent accueillir des aliments à cuire. Le dispositif possède plusieurs modes d'utilisation qui peuvent être utilisés de manière combinée : four, four à pizza, gril, plancha.

### Etat de la technique

Le document US20020020404 décrit un gril à charbon de bois ayant un cadre définissant une chambre de combustion destinée à recevoir le charbon de bois et une grille de cuisson montée sur le cadre et s'étendant au moins partiellement au-dessus de la chambre de combustion. Un compartiment supplémentaire est positionné verticalement à proximité de la grille de cuisson et présente une extrémité inférieure destinée à déboucher dans la chambre de combustion et interagissant avec un moyen d'étanchéité mobile, et une extrémité supérieure de remplissage pour le réapprovisionnement en charbon de bois dudit compartiment supplémentaire. Ce gril à charbon comprend un foyer horizontal, un foyer vertical et une grille de gril horizontale pouvant être déplacées à différentes hauteurs entre les parois latérales gauche et droite. En revanche, il ne comprend pas d'enceinte fermée permettant d'utiliser le dispositif en tant que four, ni de plaque pour cuire des aliments à la plancha.

Le document ITTV20110028 décrit un barbecue comprenant un corps métallique et recouvert de matériaux réfractaires, un support pour soutenir le corps, le support étant en marbre sans roues ou en métal avec des roues amovibles, et une hotte métallique amovible. La structure métallique est en forme de boîte ouverte mais ne constitue pas une enceinte. Elle est conçue pour contenir des tuiles réfractaires qui peuvent être facilement retirées et remplacées en cas d'usure. Les parois verticales sont également équipées de tuiles réfractaires. Enfin, une grille attachée à la paroi arrière peut contenir des combustibles solides dans un foyer vertical.

Le document US4089258 décrit une unité de cuisson portable avec une source de chaleur à gaz, disposée verticalement pour rôtir des aliments montés sur une broche. Une modification combine le panneau radiant vertical avec un lit de matériau radiant disposé horizontalement sous la broche et chauffé par un brûleur à gaz auxiliaire. L'enceinte peut être fermée et comprendre une grille de gril horizontale, et les parois peuvent comprendre des matériaux réfractaires. L'unité de cuisson comprend des ouvertures pour permettre une circulation de l'air, mais ne permet pas l'évacuation des cendres. Enfin, elle n'est pas adaptée pour l'utilisation de combustibles autres que du gaz, et nécessite donc d'être connecté à une source de gaz, ce qui implique des contraintes en termes d'installation, d'encombrement, et de sécurité.

Le document CH542619 décrit une rôtissoire pouvant comporter un foyer vertical et un foyer horizontal pour brûler des combustibles solides. Le dispositif comprend en outre un mécanisme destiné à varier la position des aliments suspendus et donc la chaleur qu'ils reçoivent. Le document ne décrit pas d'enceinte fermée permettant de réduire les pertes de chaleur. Un caisson supérieur accueille le mécanisme de changement de position des aliments à cuire. Ce caisson empêche un contact direct entre l'air chaud issu des foyers et la surface externe supérieure de l'enceinte.

### Résumé de l'invention

Il existe un besoin pour un dispositif de cuisson utilisable en extérieur et permettant de cuire des aliments selon plusieurs mode de cuisson différents tout en restant simple d'utilisation. De préférence, ces modes de cuissons comprendraient la cuisson au four, au gril, à la plancha, et plus spécifiquement au four à pizza c'est-à-dire dans lequel les aliments sont disposés sur la sole en matériau réfractaire et chaude d'un four. Mettre à disposition de l'utilisateur ces modes de cuisson au moyen d'un seul dispositif permettrait de diminuer le nombre de dispositifs que l'utilisateur doit posséder, et diminuerait l'entretien de ces dispositifs ainsi que l'encombrement lié à leur éventuel stockage.

De plus, il existe un besoin pour un dispositif de cuisson tel que décrit plus haut et qui permettrait l'utilisation simultanée de différents modes de cuisson, offrant ainsi plus de flexibilité et de confort à l'utilisateur. Par exemple, des aliments seraient cuits à la plancha tandis que d'autres aliments seraient disposés simultanément dans le four pour cuire ou, étant déjà cuits, pour être maintenus à une certaine température en attendant d'être consommés.

Enfin, il existe un besoin pour un dispositif de cuisson multifonction ayant les avantages décrits plus haut et nécessitant un apport réduit en combustible, ce combustible étant de préférence renouvelable et facilement accessible à moindre coût, tel que le bois ou le charbon de bois.

Un but de l'invention est de résoudre ce problème en fournissant un dispositif de cuisson modulable et multifonction utilisable en extérieur. Le dispositif selon l'invention permet de cuire des aliments au four, à la plancha, au gril ou au four à pizza, et ces différents modes de cuissons peuvent être utilisés simultanément. Le dispositif comprend en outre deux foyers aptes à accueillir des combustibles solides, et une enceinte pouvant servir de four. L'enceinte peut être fermée et sa surface intérieure est partiellement recouverte de matériaux réfractaires pour diminuer les pertes de chaleur et donc la quantité de combustible nécessaire à la cuisson des aliments au four.

L'invention est définie par les revendications indépendantes. Les revendications dépendantes définissent des modes de réalisation préférés.

Suivant un premier aspect, l'invention fournit un dispositif de cuisson multifonction pour usage en extérieur comprenant une enceinte comprenant :
- une sole horizontale d'un foyer horizontal recouverte au moins partiellement d'un premier matériau réfractaire et apte à recevoir alternativement des braises incandescentes et des aliments à cuire, la sole comprenant au moins une ouverture de la sole traversant une partie arrière de la sole ;
- une paroi arrière verticale recouverte au moins partiellement d'un second matériau réfractaire ;
- une paroi supérieure horizontale et amovible comprenant une plancha apte à la cuisson des aliments selon la méthode de la plancha, la paroi supérieure comprenant une ouverture de la paroi supérieure permettant l'échange d'air entre l'intérieur et l'extérieur de l'enceinte ;
- une paroi latérale gauche et une paroi latérale droite verticales et recouvertes au moins partiellement d'un troisième matériau réfractaire, les parois latérales gauche et droite comprenant des moyens de support adaptés au maintien d'une grille de gril horizontalement à différentes hauteurs à l'intérieur de l'enceinte et / ou au sommet de l'enceinte lorsque la paroi supérieure est retirée ;
- une paroi avant ajourée déplaçable entre deux positions afin d'ouvrir ou de fermer une ouverture avant de l'enceinte ;
la sole, la paroi arrière, la paroi supérieure, les parois latérales gauche et droite et la paroi avant ajourée en position de fermeture de l'ouverture avant de l'enceinte formant ladite enceinte, le dispositif de cuisson comprenant en outre :
- une grille de foyer vertical apte à retenir des braises incandescentes dans un foyer vertical situé à l'intérieur de l'enceinte et au-dessus d'au moins une partie de l'ouverture de la sole ;
- la grille de gril horizontale et amovible et apte à recevoir des aliments à cuire.

Par exemple, le premier matériau réfractaire, le deuxième matériau réfractaire, et le troisième matériau réfractaire peuvent être tous différents les uns des autres, ou choisis parmi seulement deux matériaux réfractaires différents, ou être tous identiques.

De préférence, le premier matériau réfractaire recouvrant la sole, le deuxième matériau réfractaire recouvrant la paroi arrière, et le troisième matériau réfractaire recouvrant la paroi latérale gauche et la paroi latérale droite, peuvent être identiques ou différents et choisis parmi les alternatives suivantes : pierre ollaire, stéatite, béton réfractaire, pierre reconstituée, brique réfractaire. En particulier, le premier matériau réfractaire recouvrant la sole est choisi de préférence parmi les alternatives suivantes béton réfractaire, pierre reconstituée, brique réfractaire ; le deuxième matériau réfractaire recouvrant la paroi arrière est choisi de préférence parmi les alternatives suivantes : pierre ollaire, stéatite, béton réfractaire, pierre reconstituée, brique réfractaire ; et le troisième matériau réfractaire recouvrant les parois latérales gauche et droite est un matériau ou une combinaison de matériaux choisis de préférence parmi les alternatives suivantes : béton réfractaire, pierre reconstituée, brique réfractaire.

Dans un mode de réalisation avantageux de l'invention, la sole du dispositif de cuisson est plane.

Dans un mode de réalisation avantageux de l'invention, la plancha présente une surface plane et apte à la cuisson des aliments d'au moins 400cm² et d'au moins 20cm x 20cm, la plancha étant avantageusement faite d'une plaque en acier inoxydable ayant une épaisseur comprise entre 2 et 10mm.

Dans un mode de réalisation avantageux de l'invention, la paroi supérieure est apte à être placée dans :
- une première position de la paroi supérieure dans laquelle l'ouverture de la paroi supérieure est adjacente au foyer vertical et à la paroi arrière de l'enceinte ;
- une deuxième position de la paroi supérieure dans laquelle l'ouverture de la paroi supérieure est adjacente à l'ouverture avant de l'enceinte ;
l'ouverture de la paroi supérieure étant préférablement fermée par un élément de fermeture de la paroi supérieure amovible et séparable de la paroi supérieure, l'élément de fermeture de la paroi supérieure comprenant préférablement des ouvertures et étant par exemple une grille, une plaque ajourée, ou une plaque continue.

Dans un mode de réalisation avantageux de l'invention, l'au moins une ouverture de la sole est fermée par un élément de fermeture de l'ouverture de la sole étant par exemple une grille ou une plaque ajourée, l'au moins une ouverture de la sole fermée par l'élément de fermeture de l'ouverture de la sole étant apte à permettre l'entrée d'air dans l'enceinte et la sortie des cendres hors de l'enceinte et à empêcher des braises incandescentes de sortir de l'enceinte.

Une hauteur de l'enceinte mesurée selon la direction verticale et séparant la sole horizontale de la paroi supérieure horizontale et amovible en position montée est avantageusement comprise entre 10 et 70 cm, préférablement entre 15 et 50 cm, préférablement entre 20 et 40 cm, et les dimensions de l'enceinte mesurées selon les directions horizontales permettent avantageusement l'insertion d'un plat de cuisson ayant une forme de cylindre circulaire droit dont un diamètre est aligné avec la direction horizontale et est compris entre 20 et 150 cm, préférablement entre 30 et 70 cm, préférablement entre 40 et 65 cm.

Dans un mode de réalisation avantageux, l'invention comprend en outre un châssis destiné à maintenir l'enceinte dans une position surélevée stable telle que la sole est horizontale et séparée du sol par une distance mesurée selon la direction verticale comprise entre 60 et 120 cm, de préférence entre 70 et 80 cm.

Le premier matériau réfractaire recouvrant la sole (3) est avantageusement choisi parmi les alternatives suivantes : béton réfractaire, pierre reconstituée, brique réfractaire. Le deuxième matériau réfractaire recouvrant la paroi arrière (6) est avantageusement choisi parmi les alternatives suivantes : pierre ollaire, stéatite, béton réfractaire, pierre reconstituée, brique réfractaire. Le troisième matériau réfractaire recouvrant les parois latérales gauche (13) et droite (14) est un matériau ou une combinaison de matériaux avantageusement choisis parmi les alternatives suivantes : béton réfractaire, pierre reconstituée, brique réfractaire.

La plancha est avantageusement constituée d'un des matériaux suivants : fonte, fonte émaillée, acier, préférablement acier inoxydable.

Dans un mode de réalisation avantageux, le dispositif de cuisson comprend en outre une paroi avant pleine amovible et apte à fermer l'ouverture avant de l'enceinte lorsqu'elle est en position montée. De préférence, la paroi avant pleine amovible peut comprendre une plaque de métal ou une vitre transparente apte à supporter une température de minimum 500°C, préférablement de minimum 700°C.

Suivant un deuxième aspect, l'invention fournit une méthode d'utilisation du dispositif de cuisson selon l'invention et comprenant les étapes suivantes :
- retirer la paroi supérieure de l'enceinte, la grille de gril, la paroi avant ajourée et la paroi avant pleine ;
- allumer un feu dans le foyer horizontal sur la sole et / ou dans le foyer vertical et attendre une apparition de braises ;
- disposer la grille de gril horizontalement à une hauteur de la sole adaptée pour la cuisson d'aliments, et disposer des aliments à cuire sur la grille de gril.

Suivant un troisième aspect, l'invention fournit une méthode d'utilisation du dispositif du cuisson selon l'invention et comprenant les étapes suivantes :
- retirer la paroi supérieure de l'enceinte, la grille de gril, la paroi avant ajourée et la paroi avant pleine ;
- allumer un feu dans le foyer horizontal sur la sole ;
- monter la paroi supérieure sur l'enceinte, de préférence dans la première position de la paroi supérieure ;
- disposer des aliments à cuire sur la plancha.

Suivant un quatrième aspect, l'invention fournit une méthode d'utilisation du dispositif de cuisson selon l'invention et comprenant les étapes suivantes :
- retirer la paroi supérieure de l'enceinte, la grille de gril, la paroi avant ajourée et la paroi avant pleine ;
- allumer un feu dans le foyer horizontal ;
- transporter le combustible du foyer horizontal vers le foyer vertical ;
- retirer des cendres du foyer horizontal ;
- monter la paroi supérieure sur l'enceinte, de préférence dans la deuxième position de la paroi supérieure ;
- disposer des aliments à cuire sur la plancha et/ou sur la sole ;
- fermer l'ouverture avant de l'enceinte avec la paroi avant ajourée ou avec la paroi avant pleine.

### Brève description des dessins

Ces aspects et d'autres aspects de l'invention seront expliqués plus en détail au moyen du/des modes de réalisation de l'invention décrits ci-après à titre d'exemple(s), en référence aux dessins annexés, sur lesquels
la Fig. 1 est une vue en perspective d'un dispositif selon l'invention, dans lequel la paroi avant ajourée est en position d'ouverture de l'ouverture avant de l'enceinte et la paroi supérieure horizontale et amovible est retirée, permettant ainsi l'utilisation du dispositif pour la cuisson d'aliment dans le mode gril ;
la Fig. 2 est une vue en perspective d'un dispositif selon l'invention, dans lequel la paroi supérieure est en position montée et prête à accueillir des aliments à cuire selon la méthode de la plancha, et dans lequel la paroi avant ajourée est en position d'ouverture de l'ouverture avant de l'enceinte ;
la Fig. 3a est une vue en perspective d'un dispositif selon l'invention, dans lequel la paroi avant ajourée est en position d'ouverture de l'ouverture avant de l'enceinte et la paroi supérieure est placée dans une première position de la paroi supérieure dans laquelle l'ouverture de la paroi supérieure est adjacente au foyer vertical et à la paroi arrière de l'enceinte ;
la Fig. 3b est une vue en perspective d'un dispositif selon l'invention, dans lequel la paroi avant ajourée est en position de fermeture de l'ouverture avant de l'enceinte et la paroi supérieure est placée dans ladite première position de la paroi supérieure ;
la Fig. 3c est une vue en perspective d'un dispositif selon l'invention, dans lequel la paroi avant ajourée est en position de fermeture de l'ouverture avant de l'enceinte et la paroi supérieure est placée dans une deuxième position de la paroi supérieure dans laquelle l'ouverture de la paroi supérieure est adjacente à l'ouverture avant de l'enceinte ;
la Fig. 4a est une vue en coupe d'un dispositif selon l'invention, dans lequel la paroi avant ajourée est en position d'ouverture de l'ouverture avant de l'enceinte et la paroi supérieure est montée ;
la Fig. 4b est une vue en coupe d'un dispositif selon l'invention, dans lequel la paroi avant ajourée est en position d'ouverture de l'ouverture avant de l'enceinte et la paroi supérieure est montée.
la Fig. 5 est une vue en perspective d'un dispositif selon l'invention, dans lequel des tiroirs situés au-dessous de la sole sont en position ouverte.

### Description détaillée d'un mode de réalisation de l'invention

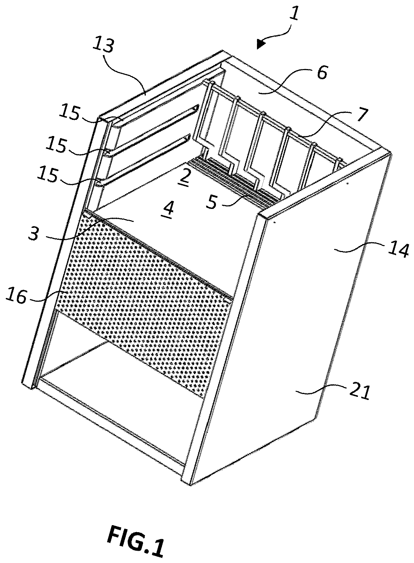

La Fig. 1 est une vue en perspective cavalière d'un premier mode de réalisation d'un dispositif de cuisson 1 selon l'invention. Le dispositif de cuisson comprend une enceinte 2 pouvant être ouverte. La forme de l'enceinte est sensiblement égale à celle d'un parallélépipède rectangle. L'enceinte est définie par six parois entourant complètement un volume de l'enceinte. Sur la Fig. 1, l'intérieur de l'enceinte est visible car une paroi supérieure 9 horizontale et amovible n'est pas représentée, et une paroi avant ajourée 16 est en position d'ouverture de l'ouverture avant de l'enceinte.

De manière générale, l'usage des qualificatifs 'horizontal' ou 'vertical' pour qualifier une paroi signifie que la normale à cette paroi est verticale ou horizontale, respectivement, c'est-à-dire parallèle ou perpendiculaire, respectivement, à la direction de la pesanteur d'un lieu lorsque le dispositif selon l'invention est monté et installé de manière adaptée pour être utilisé par un utilisateur dans ce lieu. Dans le présent document et la description qui suit, les termes verticaux et horizontaux font référence à des éléments du dispositif selon l'invention lorsque celui-ci est installé de manière appropriée pour être utilisé, c'est-à-dire de manière stable et tel que la sole 3 est horizontale. De manière similaire, les qualificatifs 'avant' ou 'arrière' désignent une partie du dispositif de cuisson qui est située du côté de l'utilisateur ou du côté opposé plus éloigné de l'utilisateur, respectivement.

### Sole et le foyer horizontal

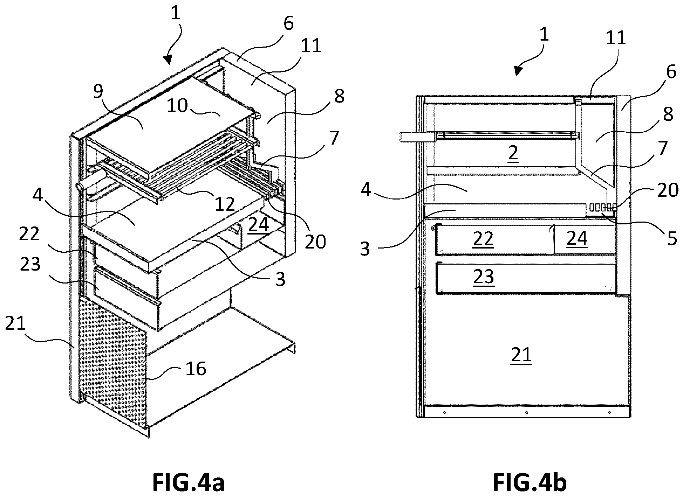

L'enceinte comprend une sole 3 horizontale et apte à accueillir un foyer horizontal 4. Cette sole est partiellement recouverte d'un premier matériau réfractaire, de préférence de pierre reconstituée, de préférence en un seul morceau. De manière générale, les matériaux réfractaires sont connus pour leur résistance à la chaleur et pour leur inertie thermique, et c'est aussi le cas pour les matériaux réfractaires utilisés dans la présente invention. La sole 3 est donc apte à constituer la sole d'un foyer et à accueillir des combustibles solides, par exemple des braises incandescentes. Alternativement, la sole est apte à accueillir des aliments à cuire tel qu'une pizza. De préférence, le premier matériau réfractaire recouvrant partiellement la sole peut être fait d'un seul morceau et ne comporte donc pas d'interstice entre des morceaux distincts dudit premier matériau réfractaire. Il peut alors être facilement nettoyé en le frottant avec une brosse ou en le grattant avec un ustensile en métal, par exemple. La sole comprend au moins une ouverture de la sole 5 traversant une partie arrière de la sole. De préférence, l'au moins une ouverture de la sole 5 peut être fermée par un élément de fermeture de l'ouverture de la sole 20 étant par exemple une grille comme illustré aux Fig. 4a et 4b. Par exemple, cette grille peut comprendre des barres métalliques de diamètre égal à 0.5 cm appartenant à un même plan et espacées de 2 cm. L'au moins une ouverture de la sole 5, lorsqu'elle est fermée par l'élément de fermeture de l'ouverture de la sole 20, est apte à permettre l'entrée d'air dans l'enceinte et la sortie des cendres hors de l'enceinte et à empêcher des braises incandescentes de sortir de l'enceinte.
De préférence, la sole peut être entièrement recouverte du premier matériau réfractaire sauf à l'endroit de l'ouverture de la sole. De préférence, le premier matériau réfractaire recouvrant la sole peut posséder une surface externe orientée vers l'intérieur de l'enceinte 2 qui est plane. Cette surface externe orientée vers l'intérieur de l'enceinte 2 peut aussi comprendre des protrusions ou des rainures dont la hauteur ou la profondeur, respectivement, est mesurée selon la direction verticale et est comprise entre 4 et 10 mm.

### Parois arrière et latérales

L'enceinte 2 comprend également une paroi arrière 6 verticale recouverte au moins partiellement d'un deuxième matériau réfractaire, et préférablement entièrement recouverte du deuxième matériau réfractaire. L'enceinte comprend également une paroi latérale gauche 13 et une paroi latérale droite 14 verticales et recouvertes au moins partiellement d'un troisième matériau réfractaire, et préférablement entièrement recouverte du troisième matériau réfractaire. Les termes 'paroi arrière verticale', 'paroi latérale gauche verticale', et 'paroi latérale droite verticale' signifient que la normale à la surface de ces parois est généralement orientée selon la direction horizontale. Ceci n'exclut pas des parois arrière ou latérales gauche ou droite légèrement inclinée ou comprenant des parties non-verticales. Néanmoins, lesdites parois s'étendent de manière générale selon une direction verticale afin de délimiter l'enceinte tout en permettant d'obtenir une hauteur de l'enceinte suffisante et préférablement comprise entre 20 et 40cm. Les parois latérales gauche 13 et droite 14 comprennent en outre des moyens de support 15 qui permettent de maintenir une grille de gril 12 en position horizontale et à différentes hauteurs à l'intérieur de l'enceinte 2. Lorsque la paroi supérieure 9 horizontale et amovible n'est pas en position montée sur l'enceinte, la grille de gril 12 peut aussi être positionnée au sommet de l'enceinte.

### Matériaux réfractaires

Les termes « premier matériau réfractaire », « deuxième matériau réfractaire », et « troisième matériau réfractaire » désignent un ou des types des matériaux recouvrant partiellement la sole 3, la paroi arrière 6, et la paroi latérale gauche 13 et la paroi latérale droite 14, respectivement.

Par exemple, le premier matériau réfractaire, le deuxième matériau réfractaire, et le troisième matériau réfractaire peuvent être tous différents les uns des autres, ou choisis parmi deux matériaux réfractaires différents, ou être tous identiques. Par exemple, le premier matériau réfractaire peut être identique au deuxième matériau réfractaire et différent du troisième matériau réfractaire, ou le premier matériau réfractaire peut être identique au troisième matériau réfractaire et différent du deuxième matériau réfractaire, ou le deuxième matériau réfractaire peut être identique au troisième matériau réfractaire et différent du premier matériau réfractaire.

Les premier, deuxième, et troisième matériaux réfractaires peuvent être choisis indépendamment les uns des autres. Le premier matériau réfractaire recouvrant la sole 3 est choisi de préférence parmi les alternatives suivantes : béton réfractaire, pierre reconstituée, brique réfractaire. Le deuxième matériau réfractaire recouvrant la paroi arrière 6 est choisi de préférence parmi les alternatives suivantes pierre ollaire, stéatite, béton réfractaire, pierre reconstituée, brique réfractaire. Le troisième matériau réfractaire recouvrant les parois latérales gauche 13 et droite 14 est un matériau ou une combinaison de matériaux choisis de préférence parmi les alternatives suivantes béton réfractaire, pierre reconstituée, brique réfractaire.

De préférence, le premier matériau réfractaire recouvrant la sole 3, le deuxième matériau réfractaire recouvrant la paroi arrière 6, et le troisième matériau réfractaire recouvrant la paroi latérale gauche 13 et la paroi latérale droite 14, peuvent être identiques ou différents et choisis parmi les alternatives suivantes : pierre ollaire, stéatite, béton réfractaire, pierre reconstituée, brique réfractaire. En particulier, le premier matériau réfractaire recouvrant la sole 3 est choisi de préférence parmi les alternatives suivantes : béton réfractaire, pierre reconstituée, brique réfractaire ; le deuxième matériau réfractaire recouvrant la paroi arrière 6 est choisi de préférence parmi les alternatives suivantes : pierre ollaire, stéatite, béton réfractaire, pierre reconstituée, brique réfractaire ; et le troisième matériau réfractaire recouvrant les parois latérales gauche 13 et droite 14 est un matériau ou une combinaison de matériaux choisis de préférence parmi les alternatives suivantes béton réfractaire, pierre reconstituée, brique réfractaire. Dans les cas où le matériau réfractaire possède des propriétés mécaniques suffisantes, celui-ci peut être l'unique matériau constituant la paroi. La fabrication du dispositif est alors simplifiée grâce au nombre réduit d'éléments à assembler. Alternativement, les matériaux réfractaires recouvrant les parois peuvent être maintenu en place au moyen d'une structure métallique. L'utilisation de matériaux réfractaires dans la présente invention permet d'augmenter la résistance thermique des parois recouvertes d'un matériau réfractaire. Cela permet de diminuer la température des surfaces extérieures des parois du dispositif, ce qui impacte positivement la sécurité du dispositif de cuisson. D'autre part, l'usage des matériaux réfractaires diminue les pertes calorifiques au travers des parois et donc la consommation de combustible associée.

### Foyer vertical

L'enceinte 2 comprend également une grille de foyer vertical 7 située dans la partie arrière de l'enceinte, comme illustré aux Fig. 4a et 4b. La grille de foyer vertical 7 est apte à retenir des combustibles solides et des braises incandescentes dans un foyer vertical 8 situé à l'intérieur de l'enceinte et au-dessus d'au moins une partie de l'ouverture de la sole 5. De préférence, le foyer vertical 8 formé par la grille de foyer vertical 7 peut être entièrement situé au-dessus de l'ouverture de la sole 5. Dans le présent contexte, la signification du terme 'au-dessus' est la suivante. Le foyer vertical 8 est au-dessus de l'ouverture de la sole car, lorsque le dispositif de cuisson selon l'invention est installé de manière telle que la sole 3 est horizontale, il existe un axe vertical qui traverse à la fois le foyer vertical et l'ouverture de la sole, et au moins une partie de la cendre qui tombe par gravité du foyer vertical se dirige vers l'ouverture de la sole. Des cendres issues du foyer vertical 8 peuvent donc sortir du foyer vertical et tomber par gravité vers l'ouverture de la sole 5. En tombant par gravité, les cendres peuvent ensuite sortir de l'enceinte en traversant l'ouverture de la sole 5 préférablement fermée par l'élément de fermeture de l'ouverture de la sole 20.

La grille de foyer vertical 7 peut avoir différentes formes. Elle peut par exemple se présenter sous la forme d'un bac et former seule un contenant apte à recevoir et contenir des braises du foyer vertical. Alternativement, la grille de foyer vertical peut par exemple être une paroi définissant un contenant en association avec la paroi arrière 6 verticale, comme dans le cas du premier mode de réalisation du dispositif selon l'invention illustré aux Fig. 4a et 4b. Dans ce cas, le foyer vertical est contenu entre la grille de foyer vertical 7 et la paroi arrière 6 et éventuellement une partie des parois latérales. Alternativement, la grille de foyer vertical peut par exemple être une paroi définissant un contenant en association avec la paroi arrière 6 et avec l'ouverture de la sole 5 fermée par l'élément de fermeture de la sole 20. Dans ce cas, l'élément de fermeture de la sole 20 empêche les braises du foyer vertical de sortir de l'enceinte, et la grille de foyer vertical 7 empêche les braises appartenant au foyer vertical de sortir du foyer vertical vers le reste de l'enceinte 2.

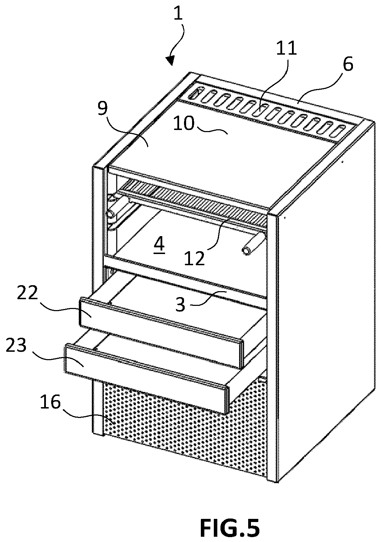

De préférence, le dispositif de cuisson selon l'invention peut comprendre un premier tiroir 22 situé au-dessous de l'enceinte. Ceci est illustré aux Fig. 4a et 4b et 5. Le premier tiroir comprend un compartiment qui constitue un bac à cendres 24. Lorsque le tiroir est dans une position fermée, le bac à cendre 24 est situé au-dessous de l'ouverture de la sole 5 et est apte à recevoir et à contenir les cendres traversant l'ouverture de la sole 5 et préférablement l'élément de fermeture de l'ouverture de la sole 20 par l'effet de la gravité.

L'enceinte comprend donc un foyer horizontal 4 et un foyer vertical 8 qui peuvent être utilisés simultanément ou séparément en fonction des besoins. Ces deux foyers sont aptes à accueillir des combustibles solides dont des braises incandescentes et dont la combustion produit des cendres, par exemple du bois ou du charbon de bois.

### Grille de gril

L'enceinte 2 comprend également une grille de gril 12 horizontale et amovible, c'est-à-dire que la grille de gril peut être retirée de l'enceinte, et qu'elle peut être placée à différentes hauteurs à l'intérieur de l'enceinte grâce aux moyens de support 15. La grille de gril est apte à recevoir des aliments à cuire et à les maintenir au-dessus du foyer horizontal et / ou à proximité du foyer vertical. Dans le présent document, la hauteur de la grille de gril 12 est relative à la sole, c'est-à-dire qu'elle désigne la distance mesurée selon la direction verticale et séparant la sole 3 horizontale de la grille de gril positionnée horizontalement à l'intérieur de l'enceinte.

L'enceinte 2 peut également comprendre une grille optionnelle de gril qui est verticale et amovible et apte à maintenir des aliments à cuire à l'intérieur de l'enceinte à proximité du foyer vertical 8 lorsque celui-ci est utilisé. Comparée à la grille de gril 12 qui est horizontale, la grille optionnelle de gril verticale permet de placer une plus grande quantité d'aliments de manière plus rapprochée du foyer vertical.

### Paroi supérieure de l'enceinte

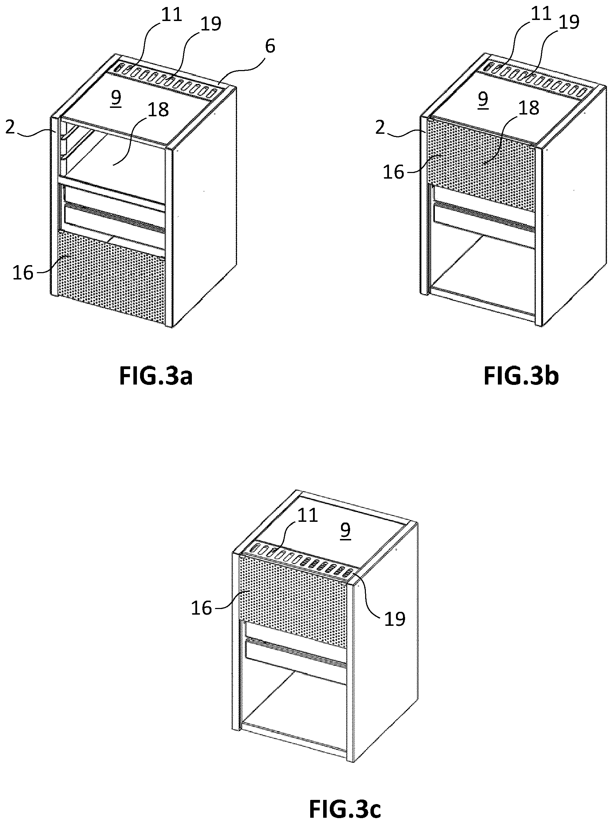

La Fig. 3b est une vue en perspective cavalière du premier mode de réalisation du dispositif de cuisson 1 selon l'invention, dans lequel la paroi supérieure 9 horizontale et amovible est en position montée, et dans lequel la paroi avant ajourée 16 est en position de fermeture de l'ouverture avant de l'enceinte 18. En position montée, la paroi supérieure 9 est horizontale et située au-dessus de la sole 3. Selon l'invention, l'ensemble des parois et la sole forment alors une enceinte, c'est-à-dire qu'elles entourent complètement un volume intérieur de l'enceinte et empêchent l'accès audit volume de l'enceinte excepté à l'endroit des ouvertures de la sole 5 et de la paroi supérieure 11 et à l'endroit des jours de la paroi avant ajourée 16. Lorsque l'enceinte 2 est fermée de cette manière, lesdites ouvertures sont aptes à être traversées par l'air extérieur arrivant et sortant dans l'enceinte afin d'assurer l'alimentation du ou des foyers en air de combustion, les jours de la paroi avant ajourée 16 et l'ouverture de la paroi supérieure 11 sont aptes à être traversés par des fumées issues de la combustion et sortant de l'enceinte, l'ouverture de la sole 5 est apte à être traversée par des cendres sortant de l'enceinte. De préférence, les jours de la paroi avant ajourée 16 peuvent permettre à l'utilisateur d'observer la combustion des combustibles solides et la cuisson des aliments à l'intérieur de l'enceinte.

La paroi supérieure 9 du dispositif de cuisson selon l'invention comprend une plancha 10 et une ouverture de la paroi supérieure 11 permettant l'échange d'air entre l'intérieur et l'extérieur de l'enceinte 2. La parois supérieure 9 comprend une plancha 10, ce qui signifie qu'au moins une partie de la surface de la paroi supérieure est apte à accueillir des aliments pour les cuire selon la méthode de la plancha. De manière générale, la cuisson à la plancha consiste à cuire les aliments directement sur une surface chauffée, plane, et souvent métallique. Selon l'invention, la plancha 10 est avantageusement constituée d'un matériau choisi parmi les suivants : fonte, fonte émaillée, acier, préférablement acier inoxydable. De préférence, la totalité de la paroi supérieure 9 du dispositif de cuisson selon l'invention peut être une plancha, excepté à l'endroit de l'ouverture de la paroi supérieure 11. De préférence, la plancha peut présenter une surface plane et apte à la cuisson des aliments d'au moins 400cm² et d'au moins 20cm sur au moins 20cm, et est faite d'une plaque en acier inoxydable ayant une épaisseur comprise entre 2 et 10mm. L'épaisseur de la plaque de la plancha est un compromis entre deux objectifs que sont, d'une part, l'obtention d'une température uniforme sur toute la surface de la plancha qui est favorisée par une augmentation de l'épaisseur d'une plaque constituant la plancha afin de d'augmenter les transferts thermiques au sein de la plaque de la plancha, et d'autre part, la manipulation aisée par l'utilisateur de la paroi supérieure 9 comprenant la plaque de la plancha qui est favorisée par une diminution de l'épaisseur de la plaque de la plancha afin de diminuer le poids total de la paroi supérieure 9.

Selon le premier mode de réalisation du dispositif de cuisson selon l'invention, la paroi supérieure 6 est avantageusement apte à être placée dans deux positions en fonction du mode de cuisson désiré. Dans une première position de la paroi supérieure illustrée à la Fig. 3b, l'ouverture de la paroi supérieure 11 est adjacente au foyer vertical, c'est-à-dire qu'elle est située au-dessus du foyer vertical 8, à l'arrière du dispositif de cuisson. Dans cette configuration, les fumées dégagées par la combustion des combustibles dans l'enceinte sont évacuées par l'arrière du dispositif. Dans une deuxième position de la paroi supérieure illustrée à la Fig. 3c, l'ouverture de la paroi supérieure 11 est adjacente à l'ouverture avant de l'enceinte. Dans cette configuration, l'ouverture de la paroi supérieure 11 est située à l'avant du dispositif de cuisson et les fumées dégagées par la combustion des combustibles dans l'enceinte sont évacuées du côté avant du dispositif.

De préférence, l'ouverture de la paroi supérieure 11 peut être fermée par un élément de fermeture de la paroi supérieure 19 amovible et séparable de la paroi supérieure 11. De préférence, l'élément de fermeture de la paroi supérieure 19 peut comprendre des ouvertures. L'élément de fermeture de la paroi supérieure 19 peut par exemple être une grille, une plaque ajourée, ou une plaque continue.

### Paroi avant ajourée

L'enceinte du dispositif de cuisson selon l'invention comprend également une paroi avant ajourée 16. Celle-ci est déplaçable entre deux positions afin d'ouvrir ou de fermer une ouverture avant de l'enceinte 18. Par exemple, elle peut être déplaçable en translation ou grâce à des charnières. Dans le premier mode de réalisation du dispositif de cuisson selon l'invention, les positions d'ouverture et de fermeture de l'ouverture avant de l'enceinte sont illustrées aux Fig. 3a et 3b, respectivement. La paroi avant ajourée 16 peut passer de la position d'ouverture à la position de fermeture par translation dans le plan de l'ouverture avant de l'enceinte 18. Le mouvement de translation est imposé par des glissières latérales entourant au moins une partie des bords de la paroi avant ajourée 16. Ces glissières latérales sont solidaires des parois latérales gauche 13 et droite 14. Fermer l'ouverture avant de l'enceinte 18 permet de diminuer les pertes de chaleur vers l'extérieur de l'enceinte 2 lorsque celle-ci est utilisée en mode four. Le combustible est alors utilisé plus efficacement. La paroi avant ajourée comporte des jours qui sont des petits trous ou des ouvertures de petites dimensions. De préférence, les jours peuvent avoir une forme circulaire et ont un diamètre compris entre 1 et 10 mm. La densité surfacique des jours sur la surface totale de la paroi avant ajourée 16 est comprise entre 1 et 90%, de préférence entre 25 et 75 %.

L'ouverture avant de l'enceinte 18 est située sur la face avant du dispositif de cuisson. Comme illustré à la Fig. 3a, l'accès à la sole du dispositif de cuisson selon le premier mode de réalisation de l'invention est aisé. Lorsque la paroi avant ajourée 16 est en position d'ouverture de l'ouverture avant de l'enceinte 18, l'ouverture avant de l'enceinte est complètement dégagée. De préférence, la sole et la surface du matériau réfractaire recouvrant partiellement la sole peuvent être plane, ce qui facilite l'accès à des aliments cuits sur la sole, en particulier pour l'utilisateur qui manipule une pizza au moyen d'une pelle à pizza. Ceci n'est pas le cas lorsque la sole n'est pas plane et possède une forme de récipient creux comme dans la majorité des dispositifs de l'art antérieur tels que les dispositifs décrits dans US20020020404 et CH542619. La caractéristique creuse du récipient induit la présence de bords sensiblement verticaux qui empêchent un accès direct au fond du récipient avec un ustensile. Dans ce cas, la manipulation d'une pizza qui cuit sur la sole à l'aide d'une pelle à pizza est difficile à cause de la présence du bord du récipient.

### Dimensions de l'enceinte

Une hauteur de l'enceinte mesurée selon la direction verticale et séparant la sole 3 horizontale de la paroi supérieure 9 horizontale et amovible en position montée est avantageusement comprise entre 10 et 70 cm, préférablement entre 15 et 50 cm, préférablement entre 20 et 40 cm, et les dimensions de l'enceinte mesurées selon les directions horizontales permettent avantageusement l'insertion d'un plat de cuisson ayant une forme de cylindre circulaire droit dont un diamètre est aligné avec la direction horizontale et est compris entre 20 et 150 cm, préférablement entre 30 et 70 cm, préférablement entre 40 et 65 cm.

### Châssis

Dans le premier mode de réalisation du dispositif de cuisson selon l'invention, celui-ci comprend un châssis destiné à surélever l'enceinte par rapport au sol afin de permettre à un utilisateur en position debout d'accéder confortablement à l'enceinte. De préférence, la sole 3 peut être maintenue dans une position surélevée stable telle que la sole 3 est horizontale et séparée du sol du lieu où le dispositif de cuisson est installé par une distance mesurée selon la direction verticale comprise entre 60 et 120 cm, de préférence entre 70 et 80cm.

Dans le premier mode de réalisation du dispositif de cuisson selon l'invention, les parois latérales gauche 13 et droite 14 sont prolongées jusqu'au sol de manière à constituer le châssis. Les parois latérales gauche et droite ont une forme rectangulaire et sont faites de pierre reconstituée. Le premier mode de réalisation du dispositif de cuisson selon l'invention comprend avantageusement un premier tiroir 22 comprenant le bac à cendres 24, et un second tiroir 23 apte à contenir des ustensiles de cuisine et à servir d'espace de rangement. Le premier et le deuxième tiroir sont supportés par le châssis 21 et peuvent être ouverts ou fermés en les faisant translater dans le plan horizontal, comme illustré à la Fig. 5.

### Paroi avant pleine

De préférence, le dispositif de cuisson selon l'invention peut comprendre en outre une paroi avant pleine, c'est-à-dire une paroi avant continue ne comprenant pas d'ouvertures. La paroi avant pleine est amovible et apte à fermer l'ouverture avant de l'enceinte 18 lorsqu'elle est en position montée. De préférence, la paroi avant pleine amovible peut comprendre une plaque de métal ou une vitre transparente apte à supporter une température de minimum 500°C, préférablement de minimum 700°C. Le montage de la paroi avant pleine permet de diminuer une surface totale des ouvertures entre l'intérieur et l'extérieur de l'enceinte 2, et donc de mieux conserver la chaleur à l'intérieur de l'enceinte et de diminuer la quantité de combustible nécessaire à la cuisson d'aliments à l'intérieur de l'enceinte.

### Modules complémentaires

De préférence, le dispositif de cuisson selon l'invention peut comprendre des modules complémentaires, par exemple une table positionnée de manière adjacente à la paroi latérale gauche ou à la paroi latérale droite, ou un meuble permettant d'entreposer des ustensiles de cuisine ou des plats ou une réserve de combustible, par exemple. Le dispositif de cuisson selon l'invention peut également comprendre d'autres modules complémentaires tels qu'un couvercle et / ou une housse de protection destinés à protéger le dispositif lorsqu'il n'est pas utilisé, pour éviter une corrosion du dispositif causée par des intempéries ou un salissement causé par un dépôt de poussière par exemple.

### Multifonctionnalité

Un avantage de l'invention réside dans la mise à disposition d'un dispositif de cuisson unique pour cuire des aliments selon quatre modes différents de cuisson : au gril, à la plancha, au four, et au four à pizza. L'invention propose des méthodes d'utilisation du dispositif selon l'invention pour réaliser la cuisson des aliments selon ces quatre modes. Les dispositifs de l'art antérieur ne permettent pas de cuire des aliments selon ces quatre modes. De plus, le dispositif selon l'invention permet de combiner ces modes de cuisson simultanément.

### Mode grill

Un premier mode de cuisson est la cuisson au gril, aussi appelé cuisson au barbecue. Dans ce mode, la paroi supérieure 9 et la paroi avant ajourée 16 sont retirées du dispositif de cuisson 1, comme représenté à la Fig. 1. La grille de gril 12 est positionnée horizontalement à l'intérieur de l'enceinte. Les combustibles solides peuvent être installés dans le foyer horizontal 4 sur la sole 3 et / ou dans le foyer vertical 8 situé dans la partie arrière de l'enceinte. La grille de gril 12 est positionnée au-dessus de la sole et accueille des aliments à cuire. Les aliments sont cuits par la chaleur dégagée par la combustion des combustibles dans le foyer horizontal 4 et / ou vertical 8. Les foyers horizontaux et verticaux peuvent être utilisés en fonction des besoins.

L'utilisation des deux foyers simultanément permet d'augmenter la chaleur produite et de cuire les aliments plus rapidement. L'utilisation du foyer horizontal 4 seul assure une bonne répartition de la chaleur sur toute la grille de gril 12. La hauteur de la grille de gril 12 peut être ajustée au besoin de chaleur pour cuire les aliments et à la puissance calorifique dégagée par la combustion. L'utilisation du foyer vertical 8 seul permet de cuire les aliments, et en particulier la viande, de manière plus saine pour la santé humaine. En effet, la graisse qui sort de la viande lors de la cuisson forme des gouttes qui traversent la grille et tombe par gravité. Si le foyer horizontal est allumé, la graisse tombe et est brûlée par le feu, dégageant des composés nocifs pour la santé humaine. Ces composés nocifs pour la santé humaines sont évaporés et remontent avec l'air chaud s'élevant du foyer horizontal, et peuvent se déposer sur les aliments situés sur la grille de gril et être ensuite ingérés par le consommateur. De plus, la graisse des aliments qui tombe dans le foyer horizontal engendre souvent des flammes qui s'élèvent du foyer et brûlent les aliments, ce qui nuit à la santé du consommateur et impacte négativement le goût des aliments. Le dispositif selon l'invention offre la possibilité de cuire des aliments installés sur la grille de gril à l'aide du foyer vertical seul. Dans cette configuration, la graisse émise par les aliments lors de la cuisson peut tomber en dessous de la grille de gril 12 sans entrer en contact avec les braises ou combustibles incandescents, évitant ainsi l'apparition de flamme et de composés nocifs pour la santé humaine.

Lorsque la combustion s'arrête, les cendres issues du foyer horizontal 4 peuvent être facilement évacuées par l'utilisateur en les poussant vers l'arrière de la sole 3 pour atteindre l'ouverture de la sole 5, les cendres pouvant alors sortir de l'enceinte en traversant l'ouverture de la sole et être réceptionnées dans le bac à cendres 24. Le foyer vertical 8 étant préférablement situé au-dessus de l'ouverture de la sole 5, les cendres issues du foyer vertical 8 tombent sur la sole 3 ou préférablement directement au travers de l'ouverture de la sole 5 vers l'extérieur de l'enceinte, et préférablement vers le bac à cendre 24.

### Mode plancha

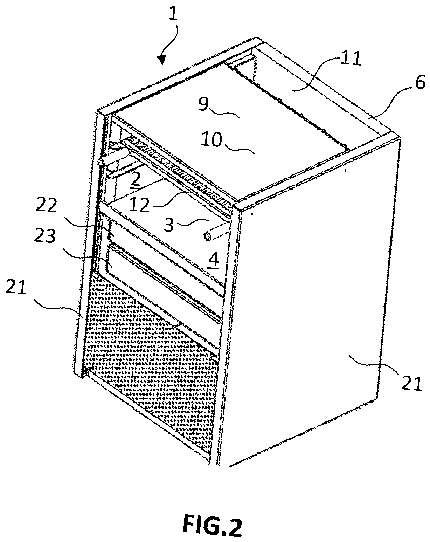

Un deuxième mode de cuisson avec le dispositif selon l'invention est la cuisson à la plancha qui consiste à cuire les aliments directement sur une surface chauffée, plane, et souvent métallique. Ce mode de cuisson est par exemple représenté à la Fig. 2. Il existe de nombreux dispositifs de cuisson pour usage en extérieur qui disposent d'un couvercle permettant de fermer une enceinte entourant le foyer et les aliments à cuire. Dans le dispositif selon l'invention, la paroi supérieure qui constitue le couvercle est judicieusement mise à profit pour cuire les aliments à la plancha. La paroi supérieure 9 comprend en effet une plancha 10. Le dispositif selon l'invention permet ainsi un mode de cuisson supplémentaire par rapport aux dispositifs de l'art antérieur sans ajouter de pièce ou partie mécanique supplémentaire au dispositif, et sans rendre le dispositif compliqué à utiliser. De plus, la paroi supérieure 9 est amovible et peut donc facilement être retirée pour nettoyer la plancha 10. La plancha peut constituer une partie de la paroi supérieure, ou préférablement l'entièreté de celle-ci excepté à l'endroit de l'ouverture de la paroi supérieure 11. Selon l'invention, la plancha est apte à la cuisson des aliments selon la méthode de la plancha, ce qui signifie que la plancha présente une surface de cuisson plane, horizontale, et est dénuée de peinture ou autres composés toxiques pour l'humain, et est en particulier dénuée de composés toxiques pour l'humain qui pourraient être dégagés et se déposer sur des aliments lorsque la plancha atteint des températures allant de 0°C à 500°C.

La plancha peut être chauffée grâce à la chaleur dégagée par la combustion dans le foyer horizontal 4. Dans ce cas, et comme illustré à la Fig. 3a, l'utilisateur placera préférablement la paroi supérieure 9 dans la première position de la paroi supérieure dans laquelle l'ouverture de la paroi supérieure 11 est adjacente au foyer vertical 8 et à la paroi arrière 6 de l'enceinte 2. Cela permet l'évacuation des fumées par l'arrière du dispositif de cuisson 1. L'utilisateur placera préférablement la paroi avant ajourée 16 dans la position de fermeture de l'ouverture avant de l'enceinte 18 afin de limiter les pertes de chaleur, comme illustré à la Fig. 3b.

La plancha peut également être chauffée grâce à la chaleur dégagée par la combustion dans le foyer vertical 8. Dans ce cas, et comme illustré à la Fig. 3c, l'utilisateur placera préférablement la paroi supérieure 9 dans la deuxième position de la paroi supérieure dans laquelle l'ouverture de la paroi supérieure est adjacente à l'ouverture avant de l'enceinte 18. Cette position de la paroi supérieure 9 améliore le transfert de la chaleur dégagée par la combustion au sein du foyer vertical à la paroi supérieure 11 et à la plancha. En effet, l'air chaud issu de la combustion au sein du foyer vertical traverse l'enceinte et lèche la surface de la paroi supérieure 9 orientée vers l'intérieur de l'enceinte, réchauffant ainsi la paroi supérieure 9 en circulant de la partie arrière vers la partie avant de l'enceinte. De préférence, l'utilisateur pourra également placer la paroi avant ajourée 16 dans la position de fermeture de l'ouverture avant de l'enceinte 18 afin de limiter les pertes de chaleur, comme illustré à la Fig. 3c.

Quel que soit le foyer utilisé pour chauffer la plancha, le mode de cuisson à la plancha peut être combiné avec le mode gril. En effet, la grille de gril 12 accueillant des aliments à cuire peut être insérée dans l'enceinte, tandis que d'autres aliments peuvent cuire simultanément sur la plancha 10. Enfin, la cuisson sur la plancha 10 peut aussi être faite en utilisant simultanément les foyers vertical et horizontal.

### Mode four

Un troisième mode de cuisson avec le dispositif selon l'invention est la cuisson d'aliment au four, par exemple dans un plat au four. Pour cela, l'utilisateur qui utilise le foyer horizontal pour produire la chaleur nécessaire à la cuisson des aliments peut placer de préférence la paroi supérieure 9 dans la première position de la paroi supérieure afin que les fumées s'échappent par l'arrière du dispositif. Comme illustré à la Fig. 3b, l'utilisateur peut fermer de préférence l'ouverture avant de l'enceinte 18 avec la paroi avant ajourée 16 ou avec la paroi avant pleine, après avoir placé le plat à l'intérieur de l'enceinte sur la grille de gril 12, au-dessus du foyer horizontal. Dans ce mode four avec foyer horizontal, il reste possible de cuire simultanément des aliments sur la plancha, et au gril au moyen d'une deuxième grille de gril apte à accueillir des aliments et positionnée dans l'enceinte au-dessus ou préférablement au-dessous de la grille de gril 12 supportant le plat au four.

La cuisson des aliments au four peut aussi être faite en utilisant le foyer vertical pour produire la chaleur. Dans ce cas, l'utilisateur peut placer la paroi supérieure 9 dans la deuxième position de la paroi supérieure afin de forcer l'air chaud issu du foyer vertical à traverser l'enceinte. Comme illustré à la Fig. 3c, l'utilisateur peut fermer de préférence l'ouverture avant de l'enceinte 18 avec la paroi avant ajourée 16 ou avec la paroi avant pleine, après avoir placé le plat à l'intérieur de l'enceinte sur la grille de gril 12, ou directement sur la sole 3. Dans ce mode four avec foyer vertical, l'utilisateur peut cuire simultanément des aliments sur la plancha 10, et au gril en utilisant si nécessaire une deuxième grille de gril apte à accueillir des aliments et positionnée dans l'enceinte.

Le mode four peut être combiné avec les autres modes de cuisson, ce qui offre l'avantage à l'utilisateur de pouvoir cuire des préparations alimentaires selon les différents modes de cuisson sans devoir utiliser des dispositifs différents, en allumant et en entretenant de préférence un seul foyer. La préparation des combustibles du foyer dans les dispositifs de cuisson en extérieur prend généralement du temps car il s'agit d'obtenir au moins des braises produisant une chaleur suffisante pour la cuisson tout en évitant de créer de grandes flammes qui brûlent la surface externe des aliments. Utiliser un seul dispositif de cuisson est donc avantageux à cet égard car le nombre de dispositifs et / ou de foyers à gérer simultanément par l'utilisateur est réduit.

De plus, la présence du mode de cuisson au four est particulièrement avantageuse quand il est nécessaire de conserver au chaud des aliments nécessitant des temps de cuissons différents sur le gril ou la plancha. Par exemple, des aliments qui cuisent plus rapidement peuvent être placés dans un plat au four en attendant d'être consommés, pendant que des aliments qui cuisent moins rapidement terminent de cuire. Lorsque tous les aliments ont fini de cuire, l'utilisateur peut alors apporter tous les aliments chauds simultanément à table, et manger en même temps que d'autres convives sans devoir attendre que les aliments qui cuisent moins rapidement finissent de cuire.

### Mode four à pizza

Un quatrième mode de cuisson avec le dispositif selon l'invention est la cuisson en mode four à pizza. Pour cuire une pizza, l'utilisateur utilisera préférablement le foyer horizontal dans un premier temps, afin de réchauffer le premier matériau réfractaire recouvrant partiellement la sole. Ensuite, les combustibles solides du foyer horizontal peuvent être déplacés dans le foyer vertical, et les cendres du foyer horizontal peuvent être poussées vers l'arrière de la sole afin de tomber dans le bac à cendre au travers de l'ouverture de la sole. Une fois les combustibles et les cendres retirées de la sole, la sole peut accueillir une pizza à cuire. L'utilisateur peut ensuite fermer l'ouverture avant de l'enceinte 18 au moyen de la paroi avant ajourée 16 ou de la paroi avant pleine, et placer la paroi supérieure 9 en position montée, de préférence dans la deuxième position de la paroi supérieure, afin de fermer l'enceinte pour mieux conserver la chaleur à l'intérieur de celle-ci. La pizza cuit alors grâce à la chaleur dégagée par la sole et par les combustibles brûlant dans le foyer vertical.

Dans un mode de réalisation avantageux de l'invention, la sole est plane, facilitant ainsi l'accès à la sole avec des ustensiles et en particulier avec une pelle à pizza. En effet, la paroi avant ajourée 16 du dispositif selon l'invention peut être placée en position d'ouverture complète de l'enceinte, ce qui signifie que l'entièreté de l'ouverture avant de l'enceinte est alors dégagée. La sole étant préférablement plane, une pizza positionnée horizontalement et à plat sur la sole peut être retirée de l'enceinte en faisant translater la pizza parallèlement à la surface de la sole dans un plan horizontal et sans modifier une position verticale de la pizza, la position verticale de la pizza étant la distance séparant la sole de la pizza mesurée selon la direction verticale.

Le mode de cuisson au four à pizza peut être combiné simultanément avec les modes de cuisson à la plancha, au four, et même au gril. Dans les cas des modes de cuisson au four ou au grill, d'autres aliments peuvent être placé sur la grille de gril au-dessus de la pizza en train de cuire, dans un plat et / ou directement sur la grille de gril à proximité du foyer vertical, respectivement.

| REF | DESCRIPTION |
|---|---|
| 1 | Dispositif de cuisson |
| 2 | Enceinte |
| 3 | Sole |
| 4 | Foyer horizontal |
| 5 | Ouverture de la sole |
| 6 | Paroi arrière |
| 7 | Grille verticale |
| 8 | Foyer vertical |
| 9 | Paroi supérieure |
| 10 | Plancha |
| 11 | Ouverture de la parois supérieure |
| 12 | Grille de gril |
| 13 | Paroi latérale gauche |
| 14 | Paroi latérale droite |
| 15 | Moyens de supports |
| 16 | Paroi avant ajourée |
| 18 | Ouverture avant de l'enceinte |
| 19 | Elément de fermeture de la paroi supérieure |
| 20 | Elément de fermeture de l'ouverture de la sole |
| 21 | Châssis |
| 22 | Premier tiroir |
| 23 | Second tiroir |
| 24 | Bac à cendres |

## Revendications

1. Dispositif de cuisson (1) multifonction pour usage en extérieur comprenant une enceinte (2) comprenant :
- une sole (3) horizontale d'un foyer horizontal (4), la sole (3) étant apte à recevoir des braises incandescentes et comprenant au moins une ouverture de la sole (5) traversant une partie arrière de la sole ;
- une paroi arrière (6) verticale recouverte au moins partiellement d'un deuxième matériau réfractaire ;
- une paroi supérieure (9) horizontale et amovible comprenant une plancha (10) plane et apte à la cuisson des aliments selon la méthode de la plancha, la paroi supérieure (9) comprenant une ouverture de la paroi supérieure (11) permettant l'échange d'air entre l'intérieur et l'extérieur de l'enceinte (2) ;
- une paroi latérale gauche (13) et une paroi latérale droite (14) verticales et comprenant des moyens de support (15) adaptés au maintien d'une grille de gril (12) horizontalement à différentes hauteurs à l'intérieur de l'enceinte (2) et/ou au sommet de l'enceinte (2) lorsque la paroi supérieure (9) est retirée ;
- une paroi avant ajourée (16) déplaçable entre deux positions afin d'ouvrir complètement ou de fermer complètement une ouverture avant de l'enceinte (18) ;
la sole (3), la paroi arrière (6), la paroi supérieure (9), les parois latérales gauche (13) et droite (14) et la paroi avant ajourée (16) en position de fermeture de l'ouverture avant de l'enceinte formant ladite enceinte (2), **caractérisé en ce que,** le dispositif de cuisson (1) comprend en outre :
- une grille de foyer vertical (7) apte à retenir des braises incandescentes dans un foyer vertical (8) situé à l'intérieur de l'enceinte et au-dessus d'au moins une partie de l'ouverture de la sole (5) ;
- la grille de gril (12) horizontale et amovible et apte à recevoir des aliments à cuire,
et **en ce que**,
- la sole (3) est recouverte au moins partiellement d'un premier matériau réfractaire, et apte à recevoir alternativement des braises incandescentes et des aliments à cuire,
- la paroi latérale gauche (13) et la paroi latérale droite (14) sont recouvertes au moins partiellement d'un troisième matériau réfractaire,
- le premier matériau réfractaire, le deuxième matériau réfractaire, et le troisième matériau réfractaire sont tous différents les uns des autres, ou choisis parmi deux matériaux réfractaires différents, ou tous identiques.

2. Dispositif de cuisson (1) selon la revendication 1 et dont une surface de la sole (3) orientée vers un intérieur de l'enceinte 2 est plane.

3. Dispositif de cuisson (1) selon l'une des revendications 1 ou 2 et dont la plancha (10) comprise dans la paroi supérieure (9) présente une surface plane et apte à la cuisson des aliments d'au moins 400cm² et d'au moins 20cm x 20cm, la plancha (10) étant faite d'une plaque en acier inoxydable ayant une épaisseur comprise entre 2 et 10mm.

4. Dispositif de cuisson (1) selon l'une quelconque des revendications précédentes et dont la paroi supérieure (9) est apte à être placée dans :
- une première position de la paroi supérieure (9) dans laquelle l'ouverture de la paroi supérieure (11) est adjacente au foyer vertical (8) et à la paroi arrière (6) de l'enceinte (2) ;
- une deuxième position de la paroi supérieure (9) dans laquelle l'ouverture de la paroi supérieure (11) est adjacente à l'ouverture avant de l'enceinte (18) ;
l'ouverture de la paroi supérieure (11) étant préférablement fermée par un élément de fermeture de la paroi supérieure (19) amovible et séparable de la paroi supérieure (11), l'élément de fermeture de la paroi supérieure (19) comprenant préférablement des ouvertures et étant par exemple une grille, une plaque ajourée, ou une plaque continue.

5. Dispositif de cuisson (1) selon l'une quelconque des revendications précédentes et dont l'au moins une ouverture de la sole (5) est fermée par un élément de fermeture de l'ouverture de la sole (20) étant par exemple une grille ou une plaque ajourée, l'au moins une ouverture de la sole (5) fermée par l'élément de fermeture de l'ouverture de la sole (20) étant apte à permettre l'entrée d'air dans l'enceinte et la sortie des cendres hors de l'enceinte et à empêcher des braises incandescentes de sortir de l'enceinte.

6. Dispositif de cuisson (1) selon l'une quelconque des revendications précédentes dont une hauteur de l'enceinte mesurée selon la direction verticale et séparant la sole (3) horizontale de la paroi supérieure (9) horizontale et en position montée est comprise entre 10 et 70 cm, préférablement entre 15 et 50 cm, préférablement entre 20 et 40 cm, et dont les dimensions de l'enceinte mesurées selon les directions horizontales permettent l'insertion d'un plat de cuisson ayant une forme de cylindre circulaire droit dont un diamètre est aligné avec la direction horizontale et est compris entre 20 et 150 cm, préférablement entre 30 et 70 cm, préférablement entre 40 et 65 cm.

7. Dispositif de cuisson (1) selon l'une quelconque des revendications précédentes et comprenant en outre un châssis (21) destiné à maintenir l'enceinte (2) dans une position surélevée stable telle que la sole (3) est horizontale et séparée du sol par une distance mesurée selon la direction verticale comprise entre 60 et 120 cm, de préférence entre 70 et 80 cm.

8. Dispositif de cuisson (1) selon l'une quelconque des revendications précédentes et dans lequel :
- le premier matériau réfractaire recouvrant la sole (3) est choisi parmi les alternatives suivantes : béton réfractaire, pierre reconstituée, brique réfractaire ;
- le deuxième matériau réfractaire recouvrant la paroi arrière (6) est choisi parmi les alternatives suivantes : pierre ollaire, stéatite, béton réfractaire, pierre reconstituée, brique réfractaire ;
- le troisième matériau réfractaire recouvrant les parois latérales gauche (13) et droite (14) est un matériau ou une combinaison de matériaux choisis parmi les alternatives suivantes béton réfractaire, pierre reconstituée, brique réfractaire.

9. Dispositif de cuisson (1) selon l'une quelconque des revendications précédentes et dont la plancha (10) est constituée d'un des matériaux suivants : fonte, fonte émaillée, acier, acier inoxydable, préférablement acier inoxydable.

10. Dispositif de cuisson (1) selon l'une quelconque des revendications précédentes et comprenant en outre une paroi avant pleine amovible et apte à fermer l'ouverture avant de l'enceinte (18) lorsqu'elle est en position montée, la paroi avant pleine amovible comprenant préférablement une plaque de métal ou une vitre transparente apte à supporter une température de minimum 500°C, préférablement de minimum 700°C.

11. Méthode d'utilisation du dispositif de cuisson (1) selon l'une quelconque des revendications 1 à 10 et comprenant les étapes suivantes :
- retirer la paroi supérieure (9) de l'enceinte, la grille de gril (12), la paroi avant ajourée (16) et la paroi avant pleine ;
- allumer un feu dans le foyer horizontal (4) sur la sole (3) et/ou dans le foyer vertical (8) et attendre une apparition de braises ;
- disposer la grille de gril (12) horizontalement à une hauteur de la sole (3) adaptée pour la cuisson d'aliments, et disposer des aliments à cuire sur la grille de gril (12).

12. Méthode d'utilisation du dispositif de cuisson (1) selon l'une quelconque des revendications 1 à 10 et comprenant les étapes suivantes :
- retirer la paroi supérieure (9) de l'enceinte, la grille de gril (12), la paroi avant ajourée (16) et la paroi avant pleine ;
- allumer un feu dans le foyer horizontal (4) sur la sole (3) ;
- disposer la paroi supérieure (9) sur l'enceinte, de préférence dans la première position de la paroi supérieure ;
- disposer des aliments à cuire sur la plancha (10).

13. Méthode d'utilisation du dispositif de cuisson (1) selon l'une quelconque des revendications 1 à 10 et comprenant les étapes suivantes :
- retirer la paroi supérieure (9) de l'enceinte, la grille de gril (12), la paroi avant ajourée (16) et la paroi avant pleine ;
- allumer un feu dans le foyer horizontal (4) ;
- transporter le combustible du foyer horizontal (4) vers le foyer vertical (8) ;
- retirer des cendres du foyer horizontal (4) ;
- disposer la paroi supérieure (9) sur l'enceinte, de préférence dans la deuxième position de la paroi supérieure ;
- disposer des aliments à cuire sur la plancha (10) et/ou sur la sole ;
- fermer l'ouverture avant de l'enceinte (18) avec la paroi avant ajourée ou avec la paroi avant pleine.
